# EUROPÄISCHE PATENTANMELDUNG

(11) **EP 0 534 351 A2**
(43) Veröffentlichungstag der Anmeldung: **31.03.1993**
(21) Anmeldenummer: 92116128.7
(22) Anmeldetag: 21.09.1992
(51) Int. Cl.: C02F 3/12

(54) **Verfahren und Anlage zur Behandlung von hochkonzentrierten Ammoniakabwasser**

(30) Priorität: 21.09.1991 GB 9120217
(71) Anmelder: THYSSEN INDUSTRIE AG, D-45128 Essen (DE)
(72) Erfinder: Antill, John Frederick, Chesterfield, S40 3PF (GB); Kirk, Brian Philip, Chesterfield, S40 3PB (GB); Haywood, Stephen Patrick, Stockport, Cheshire SK7 2DZ (GB); Oliver, Barry, Gnolall, Stafford ST20 0DY (GB)
(74) Vertreter: Dahlkamp, Heinrich-Leo, Dipl.-Ing.

(57) **Zusammenfassung**

Die Erfindung bezieht sich auf ein Verfahren zur Behandlung von hochkonzentriertem Ammoniakabwasser und Anlage zur Anwendung des Verfahrens.
Die Erfindung sieht vor, daß das Ammoniakabwasser in einem biologischen Nitrifikationsprozeß unter Anwendung der Belebtschlammtechnik durch Belüftung in einem Behälter behandelt wird und durch Zugabe von Ersatzammoniak in synthetischer Form aus einer gesonderten Einrichtung der Ammoniakgehalt im Prozeß weitgehend konstant gehalten wird.

## Beschreibung

Diese Erfindung betrifft ein Verfahren zur Behandlung von hochkonzentriertem Ammoniakabwasser und Anlage zur Anwendung des Verfahrens.

Man kann häusliches Abwasser und sonstige Abwässer, wie z.B. die bei Industrieprozessen anfallenden Abwässer, durch mikrobiologische Oxidation behandeln. Bei diesem Verfahren wird ein bakterieller Schlamm benutzt, der die in dem Wasser enthaltenen Verunreinigungen in Anwesenheit von gelöstem Sauerstoff oxidiert. Das Abwasser aus diesem Prozeß fließt in ein Absetzbecken, wo man den Schlamm sich absetzen läßt. Obwohl ein großer Teil dieses Schlamms in den Behandlungsbehälter zurückgeführt werden kann, fällt doch immer eine überschüssige Menge an, die auf irgendeine Weise entsorgt werden muß, oft vermischt mit dem sogenannten Primärschlamm, der vor dem mikrobiologischen Oxidationsprozeß abgezogen wird.

Dieser überschüssige Schlamm kann zweckmäßigerweise als organischer Dünger auf Ackerland gestreut werden. Aber in dem Zustand, in dem er aus dem Absetzbecken kommt, ist der Schlamm für einen solchen Zweck nicht geeignet, da er sehr naß, übelriechend und anderweitig verunreinigt ist. Eine weitverbreitete Methode, den Schlamm zu reinigen und praktisch geruchlos zu machen, ist die anaerobe Faulung, bei der das leicht gährungsfähige Material unter Ausschluß von Sauerstoff durch Mikroorganismen zersetzt wird. Der so stabilisierte Schlamm hat jedoch noch immer einen hohen Wassergehalt, der vor der endgültigen Entsorgung des Schlamms reduziert werden muß, wenn auch nur, um die Lager- und Transportkosten auf ein Mindestmaß zu beschränken.

Das Wasser wird gewöhnlich durch Filtern oder Zentrifugieren entfernt, aber das dabei anfallende Filtrat oder Zentrifugat ist mit Substanzen verunreinigt, die eine hohe Schmutzstoffbelastung darstellen. Insbesondere hat es einen hohen Ammoniakgehalt, der typischerweise bei 300 bis 500 mg/l liegt. Obwohl dieses Amminiakwasser in das mikrobiologische Oxidationssystem der Abwasseranlage zurückgeführt werden kann, erhöht es die Belastung dieses Systems sowohl hinsichtlich des Volumens als auch hinsichtlich der Schmutzstoffe. Das kann zur Folge haben, daß die Abwasseranlage die gesetzlichen Vorschriften bezüglich der Reinheit des in einen Wasserlauf abgeführten Abwassers nicht erfüllt oder daß die Kapazität der Abwasseranlage vergrößert werden muß, wodurch sich die Kosten der Abwasserbehandlung erhöhen. Außerdem kann dieses Amminiakwasser - abhängig vom Betriebsablauf der Anlage - diskontinuierlich anfallen, so daß große Lagertanks eingesetzt werden müssen, um eine regelmäßige Beschickung der Abwasseranlage sicherzustellen.

Ähnliches, hochkonzentriertes, vorwiegend ammoniakhaltiges Wasser kann auch aus der Entwässerung von Primärschlämmen bei der Behandlung von städtischem oder häuslichem Abwasser oder als Abwasser in den Nahrungsmittel-, chemischen, pharmäzeutischen, Öl- und sonstigen Industrien anfallen und ähnliche Entsorgungsprobleme wie die gerade erwähnten aufwerfen. Die Technik für die Umwandlung der in Abwässern enthaltenen Ammoniakverbindungen in Nitrate durch biologische Nitrifikation ist zwar vorhanden, beschränkt sich aber auf die Behandlung von Wässern mit ziemlich niedrigem Ammoniakstickstoffgehalt, der z.B. bei städtischen Abwasseranlagen typischerweise 20 mg/l oder weniger beträgt. Deshalb müßte ein konzentrietes Ammoniakwasser viele Male verdünnt werden, damit es nach dieser Technik behandelt werden könnte. Außerdem ist der Nitrifikationsprozeß als solcher empfindlich sowohl gegenüber plötzlichen Änderungen der Wassermenge oder der Schmutzstoffbehandlung als auch gegenüber dem Ammoniakabfall im Zufluß und braucht lange Zeit, um nach der Wiedereinstellung des Ammoniakgehalts seine Behandlungsleistung wieder zu erreichen. Außerdem erfordert er eine große Anlage.

Der Erfindung liegt nunmehr die Aufgabe zugrunde, ein Verfahren und eine Anlage vorzuschlagen, mit dem hochkonzentrierte, ammoniakhaltige Abwässer oder sonstige Wässer wirksam und gleichzeitig billiger und mit weniger nachtiligem Einfluß auf zugehörige Betriebsvorgänge gereinigt werden können.

Um die Einschränkungen der vorhandenen Technik zu überwinden, wird jetzt zur Lösung der Aufgabe ein Verfahren für die Reinigung von hochkonzentriertem Ammoniakwasser vorgeschlagen, das die im Kennzeichen des Anspruches 1 angegebenen Merkmale enthält. In den Unteransprüchen 2 bis 6 sind weitere erfindungsgemäße Maßnahmen angegeben. Die Ansprüche 7 bis 10 enthalten Vorschläge für eine Anlage zur Durchführung des erfindungsgemäßen Verfahrens. Bei diesem Verfahren wird solches Wasser weitgehend oder vollständig ohne vorherige Verdünnung durch einen biologischen Nitrifikationsprozeß unter Anwendung der Belebtschlammtechnik in einer kostengünstigen Kompaktanlage mit bestimmten automatischen Steuermerkmalen behandelt, und die nachteiligen Auswirkungen von Unterbrechungen im Abwasserzufluß oder von Schwankungen in der Zuflußmenge oder in der Ammoniakstickstoffkonzentration werden durch eine Ersatzammoniakzugabe in synthetischer Form überwunden, so daß die Ammoniakbelastung des Verfahrens weitgehend konstant bleibt.

Gemäß der vorliegenden Erfindung umfaßt ein Verfahren für die Reinigung von hochkonzentriertem Ammoniakwasser folgende Schritte: Belüftung des Wassers in einem Behälter, um die biologische Nitrifikation zu bewirken und eine Eingabe von zusätzlichem Ammoniak in das Wasser in der erforderlichen Menge aus einer entsprechenden quelle, um eine weitgehend konstante Ammoniakbelastung des Verfahrens aufrechtzuerhalten.

Die Erfindung umfaßt weiterhin eine Anlage für die Anwendung des obengenannten Verfahrens mit einem Behandlungsbehälter, darin angeordneten Belüftungsmitteln und Einrichtungen für die Überwachung der Ammoniakbelastung sowie auf die besagten Überwachungseinrichtungen ansprechende Einrichtungen für die Eingabe von zusätzlichem Ammoniak in den Behandlungsbehälter.

Es ist durch Versuche festgestellt worden, daß der Nitrifikationsprozeß bei einer synthetischen Lösung einer Ammoniakverbindung, wie z.B. Ammoniumsulfat, genau so gut arbeitet wie bei dem Filtrat oder Zentrifugat aus der Schlammentwässerung. Die Zugabe des zusätzlichen Ammoniaks kann mit Hilfe automatischer Dosierung, die auf der Messung der Durchflußmenge des zufließenden Abwassers beruht, sehr kostengünstig erfolgen. Dieser Einsatz einer zusätzlichen Ammoniakquelle hat mindestens drei Vorteile: er vermeidet die Notwendigkeit, Lagertanks (Pufferkapazität) für die Überbrückung der durch Stillegungen der Schlammbehandlungsanlage (z.B. an Wochenenden oder für Wartungszwecke) verursachten Unterbrechungen in der Wasserzufuhr zu bauen; er verhindert, daß der Betrieb der Nitrifikationsanlage unstabil wird; und der bietet die Möglichkeit einer "Vorabinbetriebnahme" der Nitrifikationsanlage, bevor die Anlieferung des Schlammfilters oder -zentrifugats (oder eines anderen zu behandelnden Wassers) tatsächlich beginnt, d.h. die Anlage kann im voraus betriebsbereit gemacht werden.

Bei dem vorgeschlagenen Verfahren wird die automatische Steuerung nicht nur auf die Zugabe der Ersatzammoniakquelle angewandt, sondern auch in erster Linie auf die Temperatur und den pH-Wert der Mischung aus Wasser und Schlamm in dem Nitrifikationsbehälter und in zweiter Linie auf die Konzentration des gelösten Sauerstoffs in der Flüssigphase im Behälter. Die Temperatur kann durch den Zusatz von Kühlwasser, der pH-Wert durch die Zugabe von Alkali und der Sauerstoffgehalt durch Veränderung der zugeführten Luftmenge gesteuert werden. Ein weiterer Vorteil der Erfindung ist die Fähigkeit, aus den in einer Belebtschlamm-Laboranlage erzielten Versuchsergebnissen die optimalen Behandlungsbedingungen und die optimale Anlagenauslegung für jedes einzelne Wasser zu bestimmen.

Die Kombination aller obengenannten Merkmale garantiert, daß der hochkonzentrierte Zufluß durchweg auf einen Ammoniakstickstoffgehalt von Null oder nur wenigen mg/l gereinigt wird.

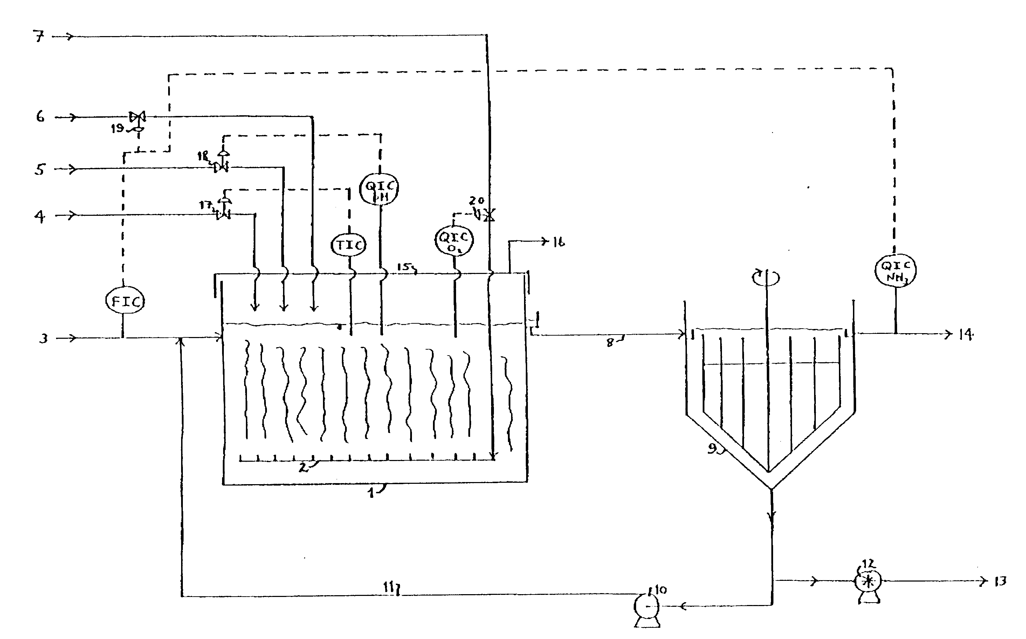

Im folgenden wird, nur um ein Beispiel zu geben, eine praktische Ausführung der Erfindung beschrieben. Dabei wird auf die beigefügte Zeichnung verwiesen, die eine für die praktische Anwendung des Verfahrens geeignete Anlage schematisch darstellt.

Das Verfahren umfaßt einen Tank **1**, in dem ein Schlamm aus nitrifizierenden Bakterien in vollständig vermischtem Zustand mit dem zu behandelnden Wasser gehalten wird. Die Abmessungen des Tanks werden in Übereinstimmung mit der Zulaufmenge des Wassers und den anhand der Laborversuche festgelegten Daten (z.B. hydraulische Verweilzeit) gewählt. Der Inhalt des Tanks **1** wird belüftet und durch einen oder mehrere Diffusoren **2** ständig in Bewegung gehalten. Wahlweise können auch Oberflächen- oder sonstige mechanische Belüfter oder Reinsauerstoffeinspritzung eingesetzt werden. Durch ein Rohr **3** fließt hochkonzentriertes Ammoniakwasser - normalerweise mit gleichmäßiger Geschwindigkeit - in den Tank **1**.

Kühlwasser wird, falls erforderlich, durch die Rohrleitung **4**, Alkali (z.B. Natronlauge) für die pH-Steuerung durch die Rohrleitung **5** und eine Ersatzammoniakquelle (z.B. Ammoniumsulfatlösung mit einem Ammoniakstickstoffgehalt von ca. 300 mg/l), falls erforderlich, durch die Rohrleitung **6** dem Tank zugeführt. Die Zufuhr von Luft zu dem (den) Diffusor(en) erfolgt durch die Rohrleitung **7**.

Das behandelte, mit bakteriellem Schlamm vermischte Wasser verläßt den Tank **1** durch ein Überlaufrohr **8** und fließt in eine Absetzkammer **9**, die entweder von radialer Bauart mit einem Drehkratzer, wie dargestellt, oder von rigendeiner anderen geeigneten Bauart sein kann. Der größte Teil des abgesetzten Schlamms wird durch eine Pumpe **10** und die Rohrleitung **11** in den Tank **1** zurückgeführt, während der überschüssige Schlamm durch eine Pumpe **12** und über die Rohrleitung **13** entsorgt wird. Der gereinigte und geklärte Abfluß wird endgültig durch die Rohrleitung **14** abgezogen. Der Tank **1** kann mit einem Deckel **15** versehen werden, der dabei hilft, den Tankinhalt auf einer konstanten Temperatur zu halten und die Geruchsbelästigung einzuschränken. In dem Deckel kann eine Entlüftungsöffnung vorgesehen werden, die erforderlichenfalls zu einer Geruchskontrollvorrichtung führt.

In der Zeichnung sind die in den Rohrleitungen **4, 5, 6** und **7** eingebauten Steuerventile mit den Zahlen **17**, **18**, **19** bzw. **20** bezeichnet. Diese regulieren automatisch den Zufluß von Kühlwasser, Alkali, Ersatzammoniakquelle bzw. Luft aufgrund der Signale (in der Zeichnung durch die gestrichelten Linien dargestellt), die sie von den entsprechenden Durchfluß(FIC)-, Temperatur(TIC)- und Konentrations(QIC)-Meßinstrumenten (Anzeige-Steuergeräte) erhalten, und in Übereinstimmung mit Meß- und Steuerprinzipien, die sachkundigen Fachleuten gut bekannt sind. Durch diese Mittel wird die Ammoniakstickstoffbelastung in der Anlage zumindest weitgehend konstant gehalten; die Temperatur und der pH-Wert des Tankinhalts werden z.B. auf 22-25°C bzw. 7,0 und die Konzentration des gelösten Sauerstoffs auf einem ausreichenden Niveau gehalten.

Im folgenden Beispiel wurde eine Belebtschlamm-Laboranlage mit einem Belüftungstank von 5 l Fassungsvermögen eingesetzt, um das Zentrifugat aus der Entwässerung eines ausgefaulten Abwasserschlamms zu behandeln, das im Verhältnis von 4 Vol.-Teilen Zentrifugat zu einem Vol.-Teil Leitungswasser verdünnt worden war. Die Behandlung wurde über mehrere Tage fortgesetzt; danach wurde der Zufluß von Zentrifugat vollständig durch eine synthetische Zufuhr von Ammoniumsulfatlösung mit ähnlicher Ammoniakstickstoffkonzentration ersetzt. Während der gesamten Versuchsdauer lief die Nitrifikation in einer stabilen und wirksamen Weise ab und ergab einen Abfluß, dessen Ammoniakstickstoffgehalt Null oder sehr niedrig war, wie aus den Werten der Tabelle **1** ersichtlich ist. Die Temperatur in dem Belüftungstank wurde auf 22-25°C und der pH-Wert auf 7 gehalten.

**Tabelle 1**

| Tag | Aufgabe | Hydraulische Verweilzeit (Stunden) | NH₄-N-Konz. (mg//l) | | NH₄-N-Belastung (kg N/m³/Tag) | Schwebestoffe im Mischwasser (mg/l) | Schwebestoffe im Abfluß (mg/l) |
|---|---|---|---|---|---|---|---|
| | | | Einl. | Ausl. | | | |
| 1 ) | | 19 | 370 | 0 | 0,42 | 1712 | 61 |
| 2 ) | | " | " | 3 | 0,48 | - | 60 |
| 3 ) | Zentrifugat | " | " | 0 | 0,42 | 1712 | 61 |
| 4 ) | + Wasser, | " | " | - | 0,42 | - | 60 |
| 5 ) | 4:1 Vol. | " | " | 3 | - | - | - |
| 6 ) | | " | " | 1 | - | - | 87 |
| 7 ) | | " | " | 0 | - | - | 115 |
| 8 ) | | " | 245 | 0 | 0,32 | - | 99 |
| 9 ) | | 17 | 278 | 6 | 0,36 | - | 63 |
| 10 ) | (NH₄)₂SO₄- | " | " | 0 | 0,36 | 2319 | 74 |
| 11 ) | Lösung | " | " | 0 | 0,36 | - | 74 |
| 12 ) | | " | " | 7 | 0,36 | - | 68 |
| 13 ) | | " | 399 | 3 | 0,55 | - | 47 |
| 14 ) | Zentrifugat | " | 459 | 7 | 0,64 | - | 80 |
| 15 ) | + Wasser, | " | " | 0 | 0,64 | - | 83 |
| 16 ) | 4:1 Vol | 30 | " | 8 | - | - | 101 |
| 17 ) | | 23 | " | 0 | 0,48 | 2948 | - |

Das Verfahren erreicht die wirksame und gleichmäßige biologische Reinigung von hochkonzentriertem Ammoniakwasser durch Nitrifikation im Belebtschlammprozeß, und zwar weitgehend oder vollständig ohne vorherige Verdünnung des Wassers, durch den Einsatz einer Kompaktanlage mit bestimmten Steuervorrichtungen in Verbindung mit einer synthetischen Ersatzammoniakquelle, um sicherzustellen, daß die Anlage auch dann in einem stabilen Zustand weiterarbeitet, wenn der Wasserzufluß verringert oder ganz abgestellt wird.

### BEZUGSZEICHENLISTE

1 Behandlungsbehälter, Tank
2 Belüftungseinrichtung, Diffusor
3 hochkonzentriertes Ammoniakwasser
4 Kühlwasser
5 Alkali
6 Ersatzammoniakzuführung
7 Luft
8 Überlauf des mit bakteriellem Schlamm vermischten Wassers
9 Absetzkammer
10, 12 Pumpe
11 Rückführleitung
13 überschüssiger Schlamm
14 gereinigter und geklärter Abfluß
15 Deckel
16 Entlüftungsöffnung
17-20 Steuerventile

## Patentansprüche

1. Verfahren zur Behandlung von hochkonzentriertem Ammoniakabwasser, dadurch gekennzeichnet, daß das Ammoniakabwasser in einem biologischen Nitrifikationsprozeß durch Belüftung in einem Behälter behandelt wird und durch Zugabe von zusätzlichem Ammoniak aus einer gesonderten Einrichtung der Ammoniakgehalt im Prozeß weitgehend konstant gehalten wird.

2. Verfahren nach Anspruch 1, dadurch gekennzeichnet, daß das hochkonzentrierte Ammoniakwasser mit kontrollierter Geschwindigkeit in den Behälter eingespeist, darin mit bakteriologischem Schlamm vermischt und nach der biologischen Nitrifikation aus diesem Behälter in eine Absetzkammer geleitet wird, aus der ein wesentlicher Teil des abgesetzten Schlamms in den Nitrifikationsbehälter zurückgeführt wird, während der überschüssige Schlamm zur Entsorgung abgezogen wird und das gereinigte und geklärte Wasser zumindest weitgehend frei von Ammoniakstickstoff aus der Absetzkammer abfließt.

3. Verfahren nach Anspruch 1 oder Anspruch 2, dadurch gekennzeichnet, daß das zusätzliche Ammoniak durch eine Ammoniumsulfatlösung geliefert wird.

4. Verfahren nach irgendeinem der vorhergehenden Ansprüche, dadurch gekennzeichnet, daß das zu behandelnde Wasser einen Ammoniakgehalt von mehr als 300 mg/l hat.

5. Verfahren nach irgendeinem der vorhergehenden Ansprüche, dadurch gekennzeichnet, daß die Temperatur des Wassers im Nitrifikationsvehälter auf einem Wert zwischen 22 und 25°C gehalten wird.

6. Verfahren nach irgendeinem der vorhergehenden Ansprüche, dadurch gekennzeichnet, daß der pH-Wert des Wassers im Nitrifikationsbehälter auf einem Wert um 7.0 gehalten wird.

7. Anlage zur Durchführung eines Verfahrens zur Reinigung von hochkonzentriertem Ammoniakwasser, wie es in irgendeinem der vorhergehenden Ansprüche erklärt worden ist, dadurch gekennzeichnet, daß die Anlage aus einem Behandlungsbehälter, Belüftungsmitteln in diesem Behälter, Mitteln für die Überwachung der Ammoniakbelastung des Verfahrens und Mitteln, die auf die besagten Überwachungsmittel ansprechen und Ersatzammoniak in den Behandlungsbehältern eingeben, besteht.

8. Anlage nach Anspruch 7, dadurch gekennzeichnet, daß die besagten Belüftungsmittel aus einem oder mehreren Luftdiffusoren bestehen, die dazu dienen, das Wasser innerhalb des Behälters belüftet und in Bewegung zu halten.

9. Anlage nach Anspruch 7 oder Anspruch 8, dadurch gekennzeichnet, daß sie eine Anzahl von automatischen Steuerventilen enthält, um die Zufuhr von Kühlwasser, Alkali, Ersatzammoniak und Luft in den Behälter aufgrund von Signalen zu regulieren, die sie jeweils von einer Anzahl von Anzeige-Steuergeräten erhalten, die den momentanen Zustand innerhalb des Behälters erfühlen.

10. Anlage nach irgendeinem der Ansprüche 7 bis 9, dadurch gekennzeichnet, daß an den Behandlungsbehälter eine Absetzkammer zur Aufnahme des nitrifizierten Wassers angeschlossen ist, wobei Mittel vorgesehen sind, um den abgesetzten Schlamm aus der besagten Kammer abzuziehen und ihn vorwiegend in den Behälter zurückzuführen und zum Teil zu entsorgen.
